## Europäisches Patentamt
## European Patent Office
## Office européen des brevets

(19)

(11) Publication number: **0 133 021**
**B1**

(12) **EUROPEAN PATENT SPECIFICATION**

(45) Date of publication of patent specification: **18.03.87**

(21) Application number: **84305075.8**

(22) Date of filing: **25.07.84**

(51) Int. Cl.⁴: **C 04 B 35/46, C 04 B 35/18**

(54) Aluminium titanate-mullite ceramics and production thereof.

(30) Priority: **27.07.83 US 517751**

(43) Date of publication of application:
**13.02.85 Bulletin 85/07**

(45) Publication of the grant of the patent:
**18.03.87 Bulletin 87/12**

(84) Designated Contracting States:
**BE CH DE FR GB IT LI NL SE**

(56) References cited:
**EP-A-0 037 868**
**DE-A-1 471 518**
**DE-B-1 238 376**
**GB-A-1 179 533**
**US-A-4 327 188**

(73) Proprietor: **Corning Glass Works**
**Houghton Park**
**Corning New York 14831 (US)**

(72) Inventor: **Day, John Paul**
**142 Davenport Road Big Flats**
**New York (US)**
Inventor: **Lachman, Irwin Morris**
**19 East Fifth Street Corning**
**New York (US)**

(74) Representative: **Smith, Sydney et al**
**Elkington and Fife High Holborn House 52/54**
**High Holborn**
**London WC1V 6SH (GB)**

Courier Press, Leamington Spa, England.

## Description

This invention relates to aluminium titanate-mullite ceramics and to the production thereof.

Ceramic honeycomb structures composed of a multitude of cells or passages separated by thin walls running parallel to the longitudinal axis of the structure with, in some instances, discontinuities designed to extend transversely through those walls are well known. Such articles have been employed extensively as filters for fluids and as heat exchangers. More recently, the walls of such structures have been coated with a catalyst capable of converting noxious fumes from the discharge gases of internal combustion engines and wood stoves into non-noxious components. As may readily be appreciated, the environment inherent in such recent applications demands that the structures exhibit a complex matrix of chemical and physical properties. For example, the flexural strength of the structure must be sufficient to withstand the mechanical forces encountered in mounting the structure plus the physical vibrations and pressures of the emission gases experienced in use along with high refractoriness, high thermal shock resistance, low thermal expansion and good resistance to physical abrasion from particles in the emission gases and to chemical attack from the fumes therein.

Numerous materials have been proposed and tested as substrates for catalyst-coated honeycomb structures including alumina-silica, alumina, zirconia-alumina, zirconia-magnesia, mullite, zircon, zircon-mullite, titania, spinel, zirconia, $Si_3N_4$ and carbon. Only two materials, however, have actually seen substantial service in that utility; viz cordierite ($2MgO.2Al_2O_3.5SiO_2$) and beta-spodumene solid solution ($Li_2O.Al_2O_3.2$—$8SiO_2$).

Beta-spodumene solid solution has a very low coefficient of thermal expansion, but its use temperature (<1200°C) is so low as to severely restrict its utility in this application. Cordierite or cordierite + a compatible refractory phase, commonly mullite, has been employed extensively as substrate structure for automotive catalytic converters. Unfortunately, such substrates do not fully meet the combined demands of high thermal shock resistance and high service temperature at the same time. Substrates are occasionally subjected to short high temperature excursions, e.g. an automobile ignition malfunction, in which the temperature exceeds 1465°C, the melting point of cordierite. Moreover, cordierite cannot meet the high temperature requirements of such applications as automotive light-off catalysts, catalytic converters for truck engines, molten metal filters and high temperature heat exchangers. To raise the service temperature, the cordierite has in some instances been diluted with a highly refractory phase, such as mullite. In so doing, however, the coefficient of thermal expansion is raised and the resistance to thermal shock is substantially decreased. Moreover, the service temperature is raised only for short time transient exposures because the cordierite fraction of the body will still melt at 1465°C. Accordingly, materials displaying higher refractoriness and thermal shock resistance have been sought for that application. United States Patent Nos. 4,118,240 and 4,327,188 are illustrative of such work. For example, US—A—4,327,188 relates to the production of ceramic honeycombs to be utilized as catalyst substrates. The articles are prepared from a combination of aluminium titanate and $SiO_2$ to which $Y_2O_3$ and/or $La_2O_3$ and/or $CeO_2$ may optionally and desirably be added. $SiO_2$ functions as a sintering aid and the rare earth elements not only perform as sintering aids, but also inhibit decomposition of aluminium titanate crystals when exposed to high temperatures. The amount of $Y_2O_3$ and/or $La_2O_3$ and/or $CeO_2$ required to be included may be reduced by adding a minor amount of $Fe_2O_3$. The honeycombs are asserted to be operable for continuous use at temperatures higher than 1450°C and for short exposures to temperatures up to 1650°C. The present invention may be regarded as an improvement thereon. According to the present invention, aluminium titanate and mullite are the predominant crystal phases, but the latter is not mentioned in this reference. The present bodies exhibit very fine intra-crystalline and grain boundary cracking, thereby endowing them with exceptional thermal shock resistance. Such a microstructure is one of the results of the carefully-defined composition in accordance with the present invention, which is neither taught nor suggested by the prior art.

Nevertheless, because of the severe environment to which the catalyst-coated honeycomb structure is subjected in emission control and other applications, the modified aluminium titanate bodies there described have not been fully satisfactory. Hence, where fabricated honeycombs are to be used as carriers for a catalyst, the ceramic must exhibit four critical characteristics; viz very high refractoriness, high porosity for carrying the catalyst wash coat combination, high flexural strength to permit the use of very thin walls in the honeycomb, thereby more effectively using the catalyst, and high thermal shock resistance. The intrinsic flexural strength of the ceramic is of particular criticality inasmuch as higher porosity results in lower strength. Consequently, a compromise must be struck between the desired high porosity and the needed flexural strength.

Sintered bodies consisting essentially of aluminium titanate and mullite are known. Because the melting point of mullite is about 1880°C and that of aluminium titanate is about 1860°C, the body resulting from firing a mixture of these two components would be expected to be highly refractory. Mullite ($3Al_2O_3.2SiO_2$) consists in weight percent of about 71.8% $Al_2O_3$ and 28.2% $SiO_2$. Aluminium titanate ($Al_2O_3.TiO_2$) consists in weight percent of about 56.06% $Al_2O_3$ and 43.94% $TiO_2$.

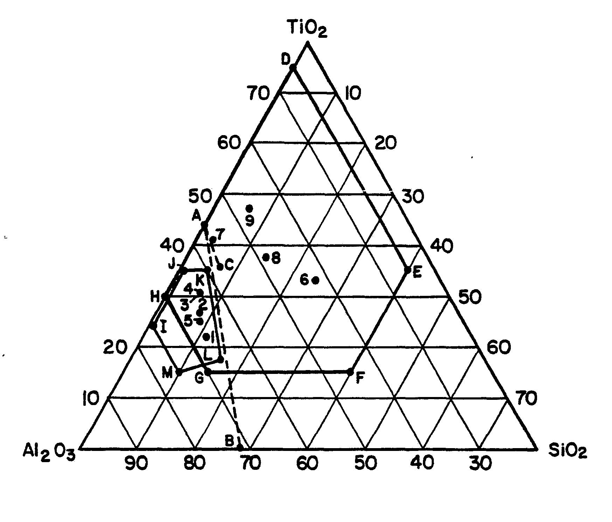

The accompanying drawing illustrates a ternary composition diagram of the $Al_2O_3$—$TiO_2$—$SiO_2$ system in terms of weight percent, Point A designating the $Al_2O_3.TiO_2$ composition and Point B the mullite composition.

2

**0 133 021**

In WADC (Weight Air Development Center) Technical Report 53—165, June, 1953, *Aluminium Titanate and Related Compounds*, N. R. Thielke fired and tested a series of bodies having compositions along the boundary between $Al_2O_3.TiO_2$ and mullite, and also along the line connecting Points A and C.

British Patent No. 1,081,142 (DE—B—1,238,376) describes the firing of compositions within the $Al_2O_3$—$TiO_2$—$SiO_2$ ternary diagram to form bodies exhibiting melting points of from 1600°C to greater than 1800°C and coefficients of thermal expansion ranging from −15 to +15 × $10^{-7}$/°C. Sintering was carried out at from 1400 to 1600°C. $Li_2O$, ZnO and the alkaline earth metal oxides were noted as useful sintering aids. This reference indicates that the addition of highly refractory materials, such as $ThO_2$, $ZrO_2$, $Y_2O_3$, $CeO_2$, carbides, nitrides, borides and sulphides raises the temperature at which the body may be used. A similar phenomenon is said to occur when a portion of the $SiO_2$ is replaced by $B_2O_3$ and/or $P_2O_5$. While no identification of the crystal phases present in the sintered products is provided, some of the compositions encompassed would yield $Al_2O_3.TiO_2$ and mullite crystals. Thus, the compositions are broadly stated to consist of $Al_2O_3$—$SiO_2$—$TiO_2$ in the mole ratio of $Al_2O_3$:0.05—1.5 $SiO_2$: 0.5—1.5 $TiO_2$. The indicated $Al_2O_3$ contents are below the present minimum.

French Patent No. 1,349,020 (DE—A—1,471,518) discloses sintered refractory bodies consisting essentially, in weight percent, of 25—70% $Al_2O_3$, 15—75% $TiO_2$, 0—20% MgO and 0.40% $SiO_2$ which it is asserted may have melting temperatures of 1700—1850°C and coefficients of expansion of zero or less. There is no suggestion of the present microstructure.

No identification of the crystal phases present in the final product was given, but the $SiO_2$-containing bodies could very well have a combination of $Al_2O_3.TiO_2$ and mullite crystals. The area bounded within Points D, E, F, G, H, D of the accompanying drawing reflects the $Al_2O_3$—$TiO_2$—$SiO_2$ compositions (exclusive of MgO) disclosed. Also, EP—A—37868 relates to a low-expansion ceramic material having a chemical composition consisting essentially of from 1.2 to 20% by weight of magnesia, from 6.5 to 68% by weight of alumina, from 19 to 80% by weight of titanium (calculated as titanium dioxide) from 1 to 20% by weight of silica, and from 0.5 to 20% by weight of iron (calculated as ferric oxide) the major component of the crystalline phase of the material being magnesium oxide/aluminium oxide/titanium dioxide/silicon oxide/ iron oxide solid solution; and the material having a coefficient of thermal expansion of not more than 20 × $10^{-7}$ (1/°C), in the temperature range 25° to 800°C, a four-point flexural strength of not less than 50 kg/ $cm^2$ (4.9 MPa) at room temperature, and a melting point of not less than 1,500°C. Unlike the present compositions, the presence of MgO is required and a different microstructure is produced. There is no reference to an aluminium titanate crystal phase.

GB—A—1,179,533 discloses as an attenuator body for microwave equipment a sintered ceramic material of low, or preferably no, porosity which consists of at least one metal titanate together with aluminium oxide and, optionally, a further ingredient or ingredients, e.g. $SiO_2$, said further ingredient or ingredients amounting to no more than 4% by weight of the whole material. There is no reference to the presence of mullite and the microstructure is far removed from that of the present materials.

As mentioned above, substrates useful in catalytic converter structures and other high temperature applications must exhibit very high refractoriness, a low coefficient of thermal expansion (<25 × $10^{-7}$/°C, preferably <10 × $10^{-7}$/°C over the range of R.T. (room temperature)—1000°C when sintered at temperatures of 1400°C and higher), excellent thermal shock and high flexural strength (a modulus of rupture generally above 2500 psi (1.7 × $10^7$ Pa; 175 kg/sq cm), preferably in excess of 4000 psi (2.7 × $10^7$ Pa; 281 kg/sq cm), when sintered at 1400°C, and greater than 5000 psi (3.4 × $10^7$ Pa; 351 kg/sq cm), preferably in excess of 6000 psi (4.1 × $10^7$ Pa; 421 kg/sq cm) when fired at 1500°C). There have now been developed such articles from a narrow range of compositions within the $Al_2O_3$—$TiO_2$—$SiO_2$ system wherein the predominant crystal phase is $Al_2O_3.TiO_2$ with a minor presence of mullite. Compositions operable in accordance with the present invention are encompassed within the area I, J, K, L, M, I of the accompanying drawing, wherein Points I—M designate the following proportions of $Al_2O_3$, $TiO_2$ and $SiO_2$ reported in terms of weight percent:

|   | $Al_2O_3$ | $TiO_2$ | $SiO_2$ |
|---|---|---|---|
| I | 75.0 | 24.0 | 1.0 |
| J | 64.0 | 35.0 | 1.0 |
| K | 60.0 | 35.0 | 5.0 |
| L | 66.0 | 17.5 | 16.5 |
| M | 75.0 | 15.0 | 10.0 |

Thus, the present invention provides a sintered ceramic characterised in that it comprises aluminium titanate and mullite as the predominant crystal phases, it exhibits grain boundary and intracrystalline

3

microcracking, high refractoriness, excellent thermal shock resistance, a coefficient of thermal expansion (R.T.—1000°C) of less than $25 \times 10^{-7}$/°C when sintered at temperatures of 1400°C and higher, a modulus of rupture of greater than 2500 psi ($1.7 \times 10^7$ Pa; 175 kg/sq cm) when sintered at 1400°C and greater than 5000 psi ($3.4 \times 10^7$ Pa; 351 kg/sq cm) when sintered at 1500°C and having a composition bounded by Points I, J, K, L, M, I of the accompanying ternary diagram.

In accordance with the present invention, such articles may be produced by a process which comprises compounding and sintering appropriate materials.

From 0.5 to 5% iron oxide, expressed in terms of $Fe_2O_3$, and/or from 0.5 to 5% rare earth metal oxide(s) will most desirably be present to serve as a sintering aid and to inhibit the decomposition of $Al_2O_3.TiO_2$ crystals when exposed to high temperatures. The rare earth oxides $La_2O_3$ and $Nd_2O_3$ have been found to be particularly useful to accomplish these purposes, although $Y_2O_3$ and $CeO_2$ are also operable.

Sintering temperatures of the order of 1650°C and higher will generally be required. However, by the use of practices well known in the art, such as the judicious choice of batch materials, the use of significant amounts of sintering aids and the use of precalcined or pre-reacted clinker as a portion of the batch, the firing temperatures required may be reduced.

It must be recognized, nonetheless, that low temperature fired bodies are appropriate only in applications where the operating temperature to which the bodies are normally exposed is below the sintering temperature of the bodies, but where refractoriness may be demanded under circumstances where short term, over-temperature conditions may be experienced, or where the chemical properties of $Al_2O_3.TiO_2$-mullite bodies are desired. Bodies sintered at low temperatures will not generally be employed in applications involving temperatures significantly above that utilized in sintering, because further shrinkage of the body will occur which may render the body unsuitable for a particular application.

Nevertheless, this capability of sintering at lower temperatures, e.g. 1100°C, is of great interest economically since it permits the fabrication of bodies exhibiting the chemical properties of the $Al_2O_3.TiO_2$-mullite composite to be used in applications where the highest refractoriness of the composite is not demanded, but where the chemical inertness of the composite is of great significance. For example, the composite appears to be much more resistant to attack by the products generated in the gas stream in wood stove combustors than is cordierite. Thus, the present compositions may be employed over a wide range of applications including wood stove combustors, molten metal filters, diesel exhaust particulate filters, high temperature automotive emissions control substrates, heat exchangers, catalytic combustion substrates, kiln furniture and components for kiln structures, for example, the sintering temperature employed being governed by the temperatures encountered in each application. To illustrate, a sintering temperature of 1400°C will customarily be sufficient for automotive emissions control substrates, thereby leading to a significant energy saving when compared to firing temperatures of 1650°C and higher. Firing shrinkages of the present compositions vary with the sintering temperature employed. For example, shrinkage averages 1—12% over a 1200—1500°C temperature range. The shrinkage of bodies fired at 1400°C is generally 3—7%.

As may be observed from the accompanying drawing, the present compositions lie on the $Al_2O_3$-rich side of the $Al_2O_3.TiO_2$-mullite boundary. The resulting bodies demonstrate very high refractoriness, minimal liquid formation during sintering, which explains the low shrinkage thereof, high strength as evidenced by modulus of rupture values in excess of 2500 psi ($1.7 \times 10^7$ Pa; 175 kg/sq.cm), preferably above 4000 psi ($2.7 \times 10^7$ Pa; 281 kg/sq cm), and very low coefficients of thermal expansion.

Microscopic examination of the fired bodies showed the presence of very fine intra-crystalline and grain boundary cracking. This microcracking enables the bodies to give under thermal stress thereby imparting very great thermal shock resistance to the present bodies.

For catalytic substrate applications porosity and pore size are important. Mercury porosimetry measurements indicated that total porosity and pore size vary with the firing temperature, the higher the temperature the lower overall porosity and the smaller the average pore size. For example, open porosity will average 30—45% where a firing temperature of 1400°C is utilized, while the average is reduced to 8—26% where a 1500°C sintering temperature is employed. Pore sizes generally range from 1 to 15 microns ($10^{-6}$m). In general, as the firing temperature is raised, the increased sintering reduces porosity, the pore size grows and the grain size of the crystals becomes greater, thereby causing more microcracking and more effect of $Al_2O_3.TiO_2$.

Table 1 below records five exemplary samples formulated to come within area I, J, K, L, M, I of the accompanying drawing expressed in terms of parts, by weight of phase assemblage and additives. The batch ceramic materials were dry blended with (as weight percent of the total ceramic materials therein) 4% methyl cellulose plasticizer/binder and 0.5% alkali stearate extrusion aid. The mixtures were plasticized with water in a mix-muller and further plasticized and de-aired by pre-extrusion into spaghetti-like masses. Thereafter, the fully plasticized and compacted batches were extruded into honeycomb green shapes, dried and fired. Table 1 also reports the constituents of the five exemplary compositions in terms of approximate weight percent on the oxide basis. Examples 1—5 (normalized exclusive of $Fe_2O_3$, $La_2O_3$ and $Nd_2O_3$) are located within area I, J, K, L, M, I of the accompanying drawing.

## TABLE 1

### Phase Assemblage + Additives

| | 1 | 2 | 3 | 4 | 5 |
|---|---|---|---|---|---|
| Mullite | 40 | 30 | 20 | 20 | 31 |
| $Al_2O_3.TiO_2$ | 50 | 60 | 70 | 70 | 57 |
| $Al_2O_3$ | 10 | 10 | 10 | 10 | 12 |
| $Fe_2O_3$ | 0.91 | 1.09 | 1.27 | 1.27 | 1.32 |
| $La_2O_3$ | 1.10 | 1.32 | 1.54 | — | — |
| $Nd_2O_3$ | 0.37 | 0.44 | 0.51 | — | — |

### Approximate Weight Percent

| | 1 | 2 | 3 | 4 | 5 |
|---|---|---|---|---|---|
| $Al_2O_3$ | 65.2 | 63.4 | 61.6 | 62.9 | 65.4 |
| $TiO_2$ | 21.5 | 25.6 | 29.7 | 30.3 | 24.6 |
| $SiO_2$ | 11.0 | 8.3 | 5.4 | 5.5 | 8.6 |
| $Fe_2O_3$ | 0.89 | 1.06 | 1.24 | 1.26 | 1.32 |
| $LA_2O_3$ | 1.07 | 1.28 | 1.49 | — | — |
| $Nd_2O_3$ | 0.36 | 0.43 | 0.49 | — | — |

### Normalized Exclusive of $Fe_2O_3$, $La_2O_3$ and $Nd_2O_3$

| | 1 | 2 | 3 | 4 | 5 |
|---|---|---|---|---|---|
| $Al_2O_3$ | 66.7 | 65.2 | 63.7 | 63.7 | 66.3 |
| $TiO_2$ | 22.0 | 26.3 | 30.7 | 30.7 | 25.0 |
| $SiO_2$ | 11.3 | 8.5 | 5.6 | 5.6 | 8.7 |

Table 2 below recites the coefficient of thermal expansion (Coef. Exp.) expressed in terms of $\times 10^{-7}/°C$ determined over the range of R.T. to 1000°C on one set of specimens of Examples 1—4 sintered for 6 hours at 1400°C and another set of Examples 1—4 sintered for 6 hours at 1500°C. Table 2 also lists modulus of rupture (MOR) values expressed in terms of psi measured at room temperature on those specimens.

TABLE 2

|  | 1 | 2 | 3 | 4 |
|---|---|---|---|---|
| MOR—1400°C | 4100 psi | 3600 psi | 4200 psi | 2700 psi |
| MOR—1500°C | 6920 psi | 6400 psi | 6320 psi | 5200 psi |
| Coef. Exp—1400°C | 17.4 | 9.2 | 3 | 19.4 |
| Coef. Exp—1500°C | 0.4 | −0.2 | −8.6 | 6 |

(2700 psi $\equiv$ 1.86 $\times 10^7$ Pa; 189.8 kg/sq cm

3600 psi $\equiv$ 2.48 $\times 10^7$ Pa; 253.1 kg/sq cm

4100 psi $\equiv$ 2.83 $\times 10^7$ Pa; 288.3 kg/sq cm

4200 psi $\equiv$ 2.90 $\times 10^7$ Pa; 295.3 kg/sq cm

5200 psi $\equiv$ 3.59 $\times 10^7$ Pa; 365.6 kg/sq cm

6320 psi $\equiv$ 4.36 $\times 10^7$ Pa; 444.4 kg/sq cm

6400 psi $\equiv$ 4.41 $\times 10^7$ Pa; 450.0 kg/sq cm

6920 psi $\equiv$ 4.77 $\times 10^7$ Pa; 486.5 kg/sq cm)

Table 2 illustrates that higher firing temperatures result in bodies of higher flexural strength and lower coefficient of thermal expansion.

Example 5 was sintered for 6 hours at 1660°C. The resulting body exhibited a coefficient of thermal expansion (R.T.—1000°C) of 12.9 $\times 10^{-7}/°C$, a porosity of 13.6% and a mean pore size of about 12 microns ($10^{-6}$m).

To demonstrate the criticality of composition to obtain the desired properties in the final product, Examples 1, 2 and 4 of British Patent No. 1,081,142 *supra*, and Sample 2 of French Patent No. 1,349,020, *supra*, were batched and fired. (Example 3 of the British reference was not studied because it contained a lithium compound, a material well known for its highly fluxing action. Sample 1 of the French reference was not investigated because it contained no $SiO_2$ so could not have mullite as a crystal phase).

Examples 1, 2 and 4 of the British reference were batched with the raw materials cited. No exemplary batch was provided from Sample 2 of the French reference so conventional ceramic materials were utilized to yield the recited oxide composition. Table 3 below records the compositions of the four batches expressed in terms of weight percent on the oxide basis. Examples 6—8 represent Examples 1, 2 and 4 respectively, of the British reference and Example 9 reflects Sample 2 of the French reference. (Examples 6—9 are for comparison purposes only). Specimens of each were batched, mixed, extruded and fired in like manner to Examples 1—4 of above Table 1. The temperature at which each specimen was fired for 6 hours is also reported in Table 3. (Because no sintering temperature was provided for Sample 2 of the French reference, 1510°C was used as a matter of convenience since such was utilized in Example 4 of the British reference. In any event, firing temperatures of 1500–1550°C are believed equivalent for all practical purposes with these compositions.) Also, Table 3 lists room temperature modulus of rupture values (psi) and coefficients of thermal expansion (R.T. −1000°C), expressed in terms of $\times 10^{-7}/°C$, determined on the specimens. Examples 6—9 are located in the accompanying drawing, Example 9 being normalized to ignore the minor MgO content.

**0 133 021**

TABLE 3

| | 6 | 7 | 8 | 9 | Normalized |
|---|---|---|---|---|---|
| $SiO_2$ | 25.0 | 3.0 | 14.2 | 6.3 | 6.5 |
| $TiO_2$ | 33.0 | 40.5 | 37.4 | 45.2 | 46.9 |
| $Al_2O_3$ | 42.0 | 56.5 | 48.4 | 44.9 | 46.6 |
| MgO | — | — | — | 3.6 | — |
| Firing Temp. | 1510 | 1530 | 1510 | 1510 | |
| Modulus of Rupture | 6110 | 1520 | 2320 | 2160 | |
| Coef. Therm. Exp. | 23.9 | 21.3 | 35.5 | 7.9 | |

(1520 psi = $1.05 \times 10^7$ Pa; 106.9 kg/sq cm
2160 psi = $1.49 \times 10^7$ Pa; 151.9 kg/sq cm
2320 psi = $1.60 \times 10^7$ Pa; 163.1 kg/sq cm
6110 psi = $4.21 \times 10^7$ Pa; 429.6 kg/sq cm)

As may be observed from the above, either the flexural strength, the coefficient of thermal expansion or both fail to satisfy the requirements of the present materials.

The present materials are particularly useful in honeycomb configurations as diesel exhaust particulate filters, such as are described in United States Patent No. 4,329,162, and as substrates for catalytic converter means in wood stove combustors, such as are disclosed in United States Patent Nos. 4,330,503 and 4,345,528.

**Claims**

1. A sintered ceramic characterised in that it comprises aluminium titanate and mullite as the predominant crystal phases, it exhibits grain boundary and intracrystalline microcracking, high refractoriness, excellent thermal shock resistance, a coefficient of thermal expansion (R.T. −1000°C) of less than $25 \times 10^{-7}$/°C when sintered at temperatures of 1400°C and higher, a modulus of rupture of greater than 2500 psi ($1.7 \times 10^7$Pa; 175 kg/sq cm) when sintered at 1400°C and greater than 5000 psi ($3.4 \times 10^7$Pa; 351 kg/sq cm) when sintered at 1500°C and having a composition bounded by points I, J, K, L, M, I of the ternary diagram of the $Al_2O_3$—$TiO_2$—$SiO_2$ system, the points following proportions of $Al_2O_3$, $TiO_2$, $SiO_2$ reported in terms of weight percent:

| | $Al_2O_3$ | $TiO_2$ | $SiO_2$ |
|---|---|---|---|
| I | 75.0 | 24.0 | 1.0 |
| J | 64.0 | 35.0 | 1.0 |
| K | 60.0 | 35.0 | 5.0 |
| L | 66.0 | 17.5 | 16.5 |
| M | 75.0 | 15.0 | 10.0 |

2. A sintered ceramic as claimed in claim 1 wherein from 0.5 to 5% $Fe_2O_3$ and/or from 0.5 to 5% (total) of at least one rare earth metal oxide is also present.

3. A sintered ceramic as claimed in claim 2 wherein the rare each metal oxide(s) is/are $La_2O_3$ and/or $Nd_2O_3$.

4. A process for the production of a sintered ceramic as claimed in claim 1 characterised in that it comprises compounding and sintering appropriate materials.

5. A sintered ceramic as claimed in claim 1 characterised in that it is in honeycomb configuration in the form of a substrate for a wood stove combustor catalytic converter.

6. A sintered ceramic as claimed in claim 1 characterised in that it is in honeycomb configuration in the form of a diesel exhaust particulate filter.

7

## Patentansprüche

1. Gesinterte Keramik, dadurch gekennzeichnet, daß sie Aluminiumtitanat und Mullit als vorherrschende Kristallphasen, eine Korngrenze und interkristalline Mikrorißbildung, hohe Feuerfestigkeit, hervorragende Wärmeschockfestigkeit, einen thermischen Ausdehnungskoeffizienten (R.T. −1000°C) von weniger als $25 \times 10^{-7}/°C$ bei der Sinterung bei Temperaturen von 1400°C und höher, einen Bruchmodul von mehr als 2500 psi $(1,7 \times 10^7 Pa; 175 \text{ kg/sq cm})$ bei Sinterung bei 1400°C und von mehr als 5000 psi $(3,4 \times 10^7 Pa; 351 \text{ kg/sq cm})$ bei Sinterung bei 1500°C aufweist und eine Zusammensetzung besitzt, die durch die Punkte I, J, K, L, M, I des ternären Diagramms des $Al_2O_3$—$TiO_2$—$SiO_2$-Systems festgelegt ist, wobei die Punkte sich an die in Gew.-% angegebenen Anteile von $Al_2O_3$, $TiO_2$. $SiO_2$ halten:

|   | $Al_2O_3$ | $TiO_2$ | $SiO_2$ |
|---|---|---|---|
| I | 75,0 | 24,0 | 1,0 |
| J | 64,0 | 35,0 | 1,0 |
| K | 60,0 | 35,0 | 5,0 |
| L | 66,0 | 17,5 | 16,5 |
| M | 75,0 | 15,0 | 10,0 |

2. Gesinterte Keramik nach Anspruch 1, dadurch gekennzeichnet, daß auch von 0,5—5% $Fe_2O_3$ und/oder von 0,5—5% (gesamt) von wenigstens einem seltenen Erdmetalloxid vorhanden ist.

3. Gesinterte Keramik nach Anspruch 2, dadurch gekennzeichnet, daß das bzw. die seltenen Erdmetalloxide $La_2O_3$ und/oder $Nd_2O_3$ ist bzw. sind.

4. Verfahren zur Herstellung einer gesinterten Keramik nach Anspruch 1, dadurch gekennzeichnet, daß es das Mischen und Sintern geeigneter Materialien umfaßt.

5. Gesinterte Keramik nach Anspruch 1, dadurch gekennzeichnet, daß sie einen Wabenaufbau in Form eines Substrats für einen katalytischen Wandler eines Holzofenbrenners aufweist.

6. Gesinterte Keramik nach Anspruch 1, dadurch gekennzeichnet, daß sie einen Wabenaufbau in Form eines Dieselabgas-Teilchenfilters aufweist.

## Revendications

1. Une matière céramique frittée caractérisée en ce qu'elle comprend du titanate d'aluminium et de la mullite comme phases cristallines prédominantes, présente une microfissuration intra-cristalline et aux limites de grains, un grand pouvoir réfractaire, une excellente résistance aux chocs thermiques, un coefficient de dilatation thermique (température ambiante— 1000°C) inférieur à $25 \times 10^{-7}/°C$ lorsqu'elle est frittée à des températures de 1400°C et plus, un module de rupture supérieur à 2500 psi $(1,7 \times 10^7 la; 175 \text{ kg/cm}^2)$ lorsqu'elle est frittée à 1400°C et supérieur à 5000 psi $(3,4 \times 10^7 la; 351 \text{ kg/cm}^2)$ lorsqu'elle est frittée à 1500°C, et à une composition délimitée par les points I, J, K, L, M, I du diagramme ternaire du système $Al_2O_3$—$TiO_2$—$SiO_2$, les points correspondants aux proportions suivantes de $Al_2O_3$, $TiO_2$ et $SiO_2$, indiqués en pourcents en poids:

|   | $Al_2O_3$ | $TiO_2$ | $SiO_2$ |
|---|---|---|---|
| I | 75.0 | 24.0 | 1.0 |
| J | 64.0 | 35.0 | 1.0 |
| K | 60.0 | 35.0 | 5.0 |
| L | 66.0 | 17.5 | 16.5 |
| M | 75.0 | 15.0 | 10.0 |

2. Une matière céramique frittée selon la revendication 1 dans laquelle est également présent de 0,5 à 5% de $Fe_2O_3$ et/ou de 0,5 à 5% (au total) d'au moins un oxyde de métal de terres rares.

3. Une matière céramique frittée selon la revendication dans laquelle le(s) oxyde(s) de métaux de terres rares est/sont $La_2O_3$ et/ou $Nd_2O_3$.

4. Un procédé de production d'une matière caramique frittée selon la revendication 1, caractérisé en ce qu'il comprend le mélange et le frittage de matières appropriées.

5. Une matière céramique frittée selon la revendication 1, caractérisée en ce qu'elle est sous une configuration de nid d'abeilles sous la forme d'un substrat pour un convertisseur catalytique pour chambre de combustion de fours à bois.

6. Une matière céramique frittée selon la revendication 1, caractérisée en ce qu'elle est sous une configuration de nid d'abeilles sous la forme d'un filtre particulaire pour l'échappement d'un moteur Diésel.